# EUROPEAN PATENT APPLICATION

(11) **EP 3 490 124 A1**
(43) Date of publication of application: **29.05.2019**
(21) Application number: 17833857.0
(22) Date of filing: 07.06.2017
(51) Int. Cl.: H02K 33/18, G01J 3/06, G01J 3/45

(54) **VOICE COIL MOTOR, AND MOVABLE MIRROR UNIT AND INTERFERENCE SPECTROPHOTOMETER EQUIPPED WITH SAME**

(30) Priority: 25.07.2016 JP 2016145487
(71) Applicant: Shimadzu Corporation, Kyoto-shi, Kyoto-fu 604-8511 (JP)
(72) Inventor: MARUNO, Hiromasa, Kyoto-shi Kyoto 604-8511 (JP); MORIYA, Naoji, Kyoto-shi Kyoto 604-8511 (JP); HASHIMOTO, Toyoyuki, Kyoto-shi Kyoto 604-8511 (JP); MURAMATSU, Takashi, Kyoto-shi Kyoto 604-8511 (JP); KATSU, Hideaki, Kyoto-shi Kyoto 604-8511 (JP)
(74) Representative: Kilian Kilian & Partner
(86) International application number: PCT/JP2017/021051
(87) International publication number: WO 2018/020847

(57) **Abstract**

In the voice coil motor and the interference spectrophotometer according to the invention, the angular deviation between the movable and fixed mirrors can always be suppressed to one second or less. The voice coil motor is provided with: a static unit 71 including a yoke 73 having a cylindrical part 73a fixed to the static unit 71 and a magnet 74 disposed in the cylindrical part 73a fixed to the static unit71; a movable unit 72 including a circular coil 72b fixed thereto, the circular coil 72b disposed between the cylindrical part 73a of the yoke 73 and the magnet74; and a power supply line 72c for connecting the coil 72b to a power supply. The cylindrical part 73a of the yoke 73 has a slit 73c through which the power supply line 72c is to pass is created, the movable unit 72 is configured to reciprocally move relative to the static unit 71 in response to an electromagnetic force generated by the magnet 74 in conjunction with the activated coil 72b, and another slit 73d is created in the cylindrical part 73a of the yoke 73 in such a manner that the slits 73c,73d are symmetrical with respect to a central axis of the cylindrical part73a.

## Description

### TECHNICAL FIELD

The present invention relates to a voice coil motor (hereinafter, abbreviated as "VCM") and an interference spectrophotometer such as a Fourier transform infrared spectrophotometer (hereinafter, abbreviated as "FTIR").

### BACKGROUND ART

Michelson 2-beam interferometers that are used for an FTIR have such a configuration that infrared rays emitted from an infrared ray source are divided into two directions, one directed towards a fixed mirror and the other directed towards a movable mirror, by a beam splitter, and light that has returned by being reflected from the fixed mirror and light that has returned by being reflected from the movable mirror are combined by the beam splitter so as to be sent to one light path. At this time, the movable mirror can be moved to the front or rear along the direction of the axis of the entering light (forward and backward direction) in order to change the difference in the light path between the two divided beams, and therefore, the resulting light provides an interferometer where the light intensity changes in accordance with the location of the movable mirror.

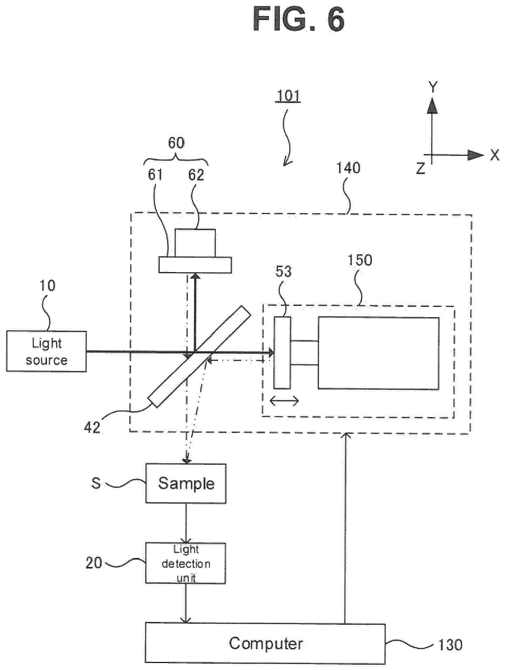

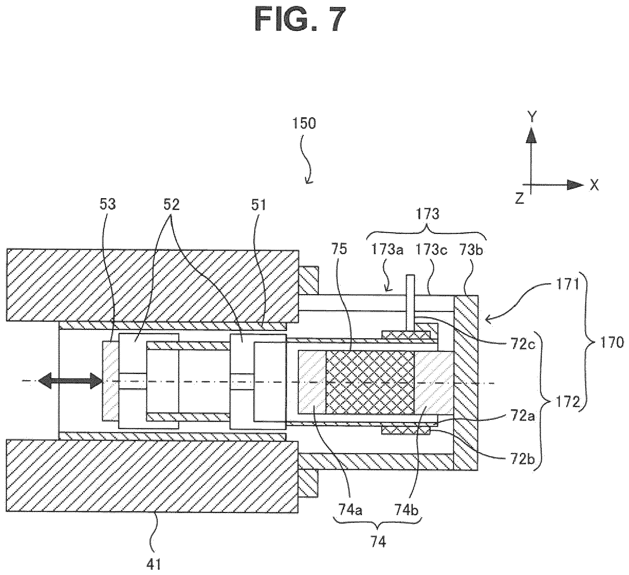

FIG. 6 is a diagram showing the configuration of the essential part of a conventional FTIR, and FIG. 7 is a horizontal cross-sectional diagram showing the movable mirror unit in FIG. 6. Here, one direction that is horizontal relative to the ground is the X direction, the direction that is horizontal relative to the ground and perpendicular to the X direction is the Y direction, and the direction that is perpendicular to the X direction and the Y direction is the Z direction.

An FTIR 101 is provided with a main interferometer essential part 140, a light source 10 for emitting infrared rays, a light detection unit 20 for detecting an interferometer, and a computer (control unit) 130.

The light source 10 is provided with an infrared ray source for emitting infrared rays, a converging mirror and a collimator. As a result, the infrared rays emitted from the infrared ray source pass through the converging mirror and the collimator before entering into the beam splitter 42 in the main interferometer essential part 140.

The light detection unit 20 is provided with an ellipsoidal mirror and a light detector for detecting an interferogram. As a result, the light with which a sample S is irradiated transmits through (or is reflected from) the sample S and is collected by the ellipsoidal mirror so as to be emitted to the light detector.

The main interferometer essential part 140 is provided with a housing 41, a beam splitter 42, a movable mirror unit 150 equipped with a movable mirror 53, a fixed mirror unit 60 equipped with a fixed mirror 61 and an alignment mechanism 62.

The movable mirror unit 150 is provided with a hollow pipe 51 in cylindrical shape having a central axis in the forward and backward direction (X direction) and a piston 52 in cylindrical shape that is disposed within the hollow pipe 51 such that reciprocal movement is possible in the forward and backward direction, a movable mirror 53 fixed to the front portion of the piston 52 and a VCM 170 (see Patent Literature 1).

The VCM 170 is provided with a static unit 171 and a movable unit 172.

The static unit 171 is provided with a cylindrical part 173a in cylindrical shape having a central axis in the forward and backward direction, a yoke 173 made of iron (a magnetic material) having a rear sidewall 73b in disc form, two magnets 74 (74a, 74b) in columnar form having a central axis in the forward and backward direction, and a pole piece 75 in columnar form having a central axis in the forward and backward direction. The first magnet 74a, the pole piece 75 and the second magnet 74b are fixed to the center portion of the front surface of the rear sidewall 73b of the yoke 173 in this order, and thus are disposed within the cylindrical portion 173a of the yoke 173. In addition, the front portion of the cylindrical part 173a is attached to the rear portion of the housing 41 (hollow pipe 51). Furthermore, a slit (oblong hole) 173 that extends in the forward and backward direction is created in the right sidewall of the cylindrical part 173a of the yoke 173.

The movable unit 172 is provided with a bobbin 72a in cylindrical shape having a central axis in the forward and backward direction, and a circular coil 72b wound around the outer peripheral surface of the rear portion of the bobbin 72a. In addition, the front portion of the bobbin 72a is attached to the rear portion of the piston 52. Furthermore, the coil 72b is disposed between the cylindrical part 173a of the yoke 173 and the pole piece 75 so as to be electrically connected to the power supply (not shown) via a power supply terminal (power supply line) 72c disposed so as to penetrate through the slit 173c in the upward and downward directions (Y direction).

When a current is made to flow through the coil 72b via the power supply terminal 72c, the coil 72b receives an electromagnetic force (Lorentz force) due to the magnetic field generated between the yoke 173 and the pole piece 75 and moves in the forward and backward direction, and as a result, the movable mirror 53 that is fixed to the piston 52 also moves in the forward and backward direction.

In the thus-formed FTIR 101, it is necessary to suppress the angular deviation between the movable mirror 53 and the fixed mirror 61 to one second or less in order to measure the sample S having a high S/N ratio while securing a sufficient throughput. In order to do so, the computer 130 controls in real time the angle of the fixed mirror 61 in response to the angular deviation of the movable mirror 53 by using an alignment mechanism 62.

### CITATION LIST

### PATENT LITERATURE

Patent Literature 1: Japanese Translation of International Patent Publication H6 (1994)-505804

### SUMMARY OF THE INVENTION

### 1. Technical Problem

Depending on the measurement mode (measurement type of sample S) in an interference spectrophotometer such as an FTIR, a short stroke high-speed drive or a long stroke low-speed drive of the movable mirror 53 have been required.

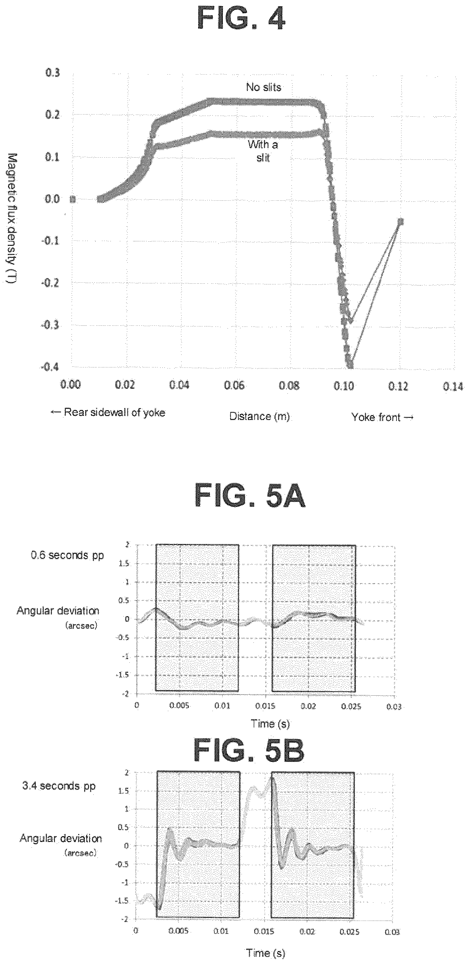

In the FTIR 101 as described above, however, a large acceleration is applied at the time of return during the short stroke high-speed drive, and therefore, such a problem arises that the angular control of the fixed mirror 61 by the computer 130 cannot follow the return movement (see FIG. 5(b)).

### 2. Solution to Problem

In order to solve the above-described problem, the present inventors examined a method for suppressing the angular deviation between the movable mirror 53 and the fixed mirror 61 to one second or less, even at the time of high-speed drive. FIG. 4 is a table showing the simulation results of the difference in the magnetic flux density between the right sidewall (with a slit 173c) of the cylindrical part 173a of the yoke 173 and the left sidewall (with no slit) of the cylindrical part 173a, and thus, it can be seen that the magnetic flux is weaker on the side with a slit. The magnetic flux density is proportional to the impellent (Lorentz force), and therefore, a difference is created in the impellent in the same manner as the difference in the magnetic flux density.

When a current flows through the coil 72b wound around the bobbin 72a, the piston 52 fixed to the bobbin 72a receives a force in the forward direction (-X direction) or the rear direction (X direction) so as to slide. At this time, a weak impellent is generated on the side with the slit 173c, and therefore, it was found that the surface of the movable mirror 53 faces such a direction that the mirror surface is turned away even in the state where the piston 52 is held within the hollow pipe 51. Typically, such a momentum that accompanies the rotation to the right with the Z direction being the rotational axis is applied to the movable unit (the piston 52 and the like) when the coil 72b moves in the forward direction, and such a momentum that accompanies the rotation to the left is applied to the movable unit when the coil 72b moves in the rear direction.

Thus, it was found that another slit can be provided on the side of the cylindrical part of the yoke in such a manner that the slits are symmetrical relative to the cylindrical part in order to cancel the difference in the impellent. Here, FIG. 5(b) shows the results of evaluation of the angular deviation (3.4 seconds pp) in the case where a slit is provided only on one side of the cylindrical part of the yoke, and FIG. 5(a) shows the results of evaluation of the angular deviation (0.6 seconds pp) in the case where a slit is provided on two sides of the cylindrical part of the yoke. In the case where a slit is provided on two sides, the angular deviation can be reduced to approximately 1/5 (0.6 seconds pp) as compared to the case where a slit is provided only on one side.

Namely, the voice coil motor according to the present invention is provided with: a static unit including a yoke having a cylindrical part fixed to the static unit and a magnet disposed in the cylindrical part fixed to the static unit; a movable unit including a circular coil fixed thereto, the circular coil disposed between the cylindrical part of the yoke and the magnet; and a power supply line for connecting the coil to a power supply, wherein the cylindrical part of the yoke has a slit through which the power supply line is to pass is created, the movable unit is configured to reciprocally move relative to the static unit in response to an electromagnetic force generated by the magnet in conjunction with the activated coil, and another slit is created in the cylindrical part of the yoke in such a manner that the slits are symmetrical with respect to a central axis of the cylindrical part.

### 3. Advantageous Effects of the Invention

As described above, the voice coil motor according to the present invention is provided with another slit in such a manner that the slits are symmetrical relative to the central axis of the yoke in order to cancel the difference in the impellent, and thus, such a momentum that might cause a rotational movement in the movable unit can be prevented from being generated.

### 4. Other Solutions to Technical Problem and Advantageous Effects Thereof

In the invention, a first slit that is parallel to the above-described central axis and a second slit having the same shape as the first slit may be created in the cylindrical part of the yoke. (In the invention, the slits(oblong hole) extend in parallel with the central axis.)

In addition, the movable mirror unit in the present invention may be provided with a voice coil motor as described above, a hollow pipe having a cylindrical shape, and a piston disposed in the hollow pipe, the piston being reciprocally movable in the hollow pipe, wherein the piston includes a movable mirror fixed thereto and the movable unit are fixed to the piston.

In the movable mirror unit in the present invention, the difference in the impellent in the voice coil motor is cancelled so that such a momentum that might cause rotational movement in the movable mirror can be prevented from being generated.

Furthermore, the interference spectrophotometer according to the present invention may be provided with: a movable mirror unit as described above; a light source for emitting light; a fixed mirror; a beam splitter configured for the processes of splitting light received from the light source into two beams, directing one beam towards the fixed mirror and the other beam towards the movable mirror, receiving first returning light reflected from the fixed mirror and second returning light reflected from the movable mirror, combining the first and second reflecting beams of light into interference light; a light detection unit on which a sample is arranged, the detector configured to detect the interference light that has transmitted through or has been reflected from the sample; and a control unit for controlling the speed of the movable unit or the moving distance of the movable unit with the coil activated via the power supply line.

In the interference spectrophotometer according to the present invention, the difference in the impellent in the voice coil motor is cancelled, and such a momentum that might cause rotational movement is prevented from being generated, and thus, the angular deviation between the movable mirror and the fixed mirror when driven at a high speed can be made small.

### BRIEF DESCRIPTION OF DRAWINGS

FIG. 1 is a diagram showing the configuration of the essential part of the FTIR according to the present invention;
FIG. 2 is a horizontal cross-sectional diagram showing the movable mirror unit in FIG. 1;
FIGS. 3(a) and 3(b) are cross-sectional diagrams showing the VCM in FIG. 2;
FIG. 4 is a graph showing the simulation results of the difference in the magnetic flux density depending on the existence of a slit;
FIGS. 5(a) and 5(b) are graphs showing the evaluation results of the angular deviation;
FIG. 6 is a diagram showing the configuration of the essential part of a conventional FTIR; and
FIG. 7 is a horizontal cross-sectional diagram showing the movable mirror unit in FIG. 6.

### DETAILED DESCRIPTION OF EMBODIMENTS

In the following, the embodiments of the present invention are described in reference to the drawings. Here, the present invention is not limited to the below-described embodiments, and various types of modifications are included as long as the gist of the present invention is not deviated from.

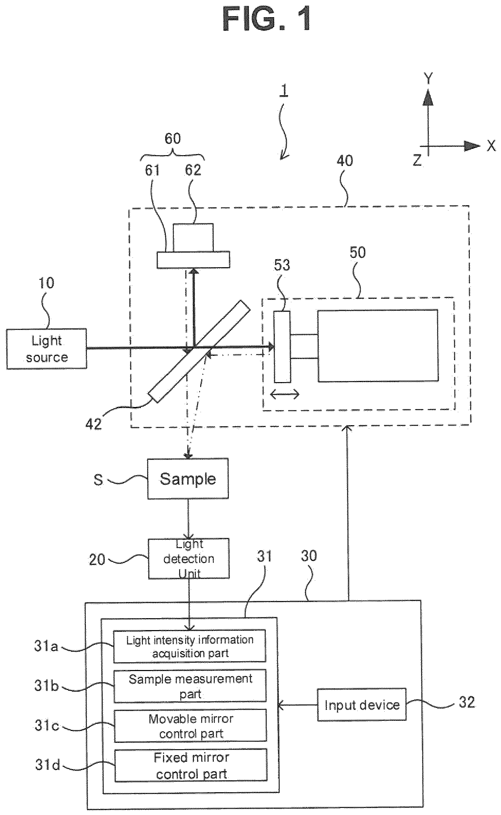

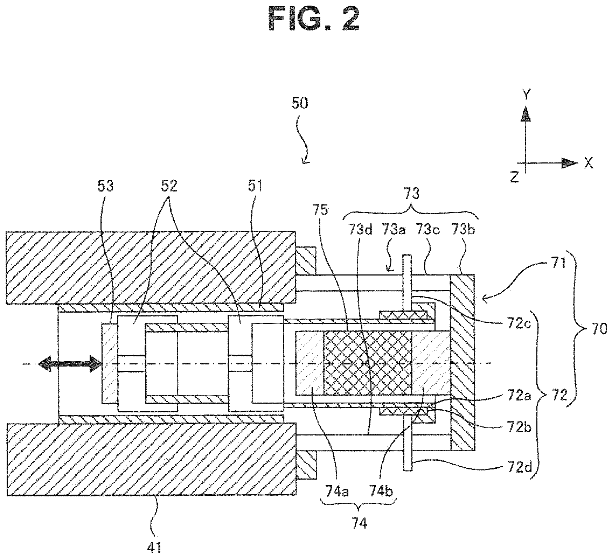

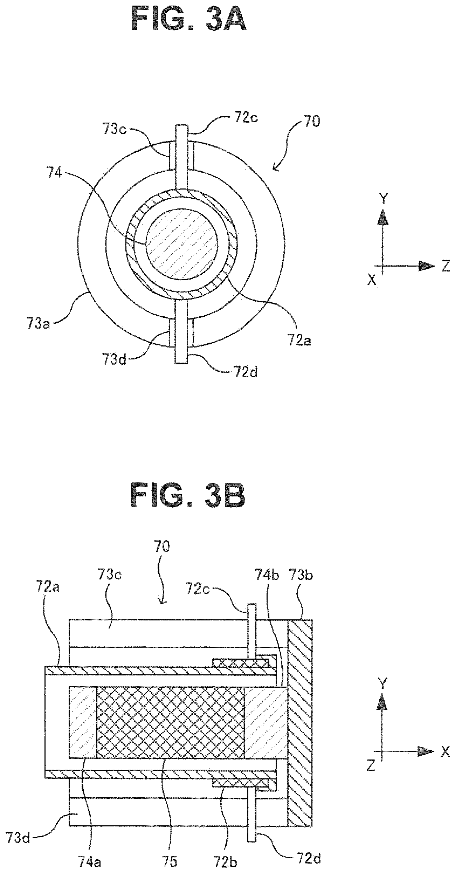

An FTIR is cited as an example of the interference spectrophotometer according to the present invention, and FIG. 1 shows the configuration of the essential part thereof. FIG. 2 is a horizontal cross-sectional diagram showing the movable mirror unit 50 in FIG. 1. In addition, FIGS. 3(a) and 3(b) are cross-sectional diagrams showing the VCM 70 in FIG. 2, where FIG. 3(a) is a longitudinal cross-sectional diagram and FIG. 3(b) is a horizontal cross-sectional diagram. Here, the same symbols are attached to the same components as in the above-described FTIR 101, and thus, the descriptions thereof are not repeated.

An FTIR 1 is provided with a main interferometer essential part 40, a light source 10 for emitting infrared rays, a light detection unit 20 for detecting an interferogram, and a computer (control unit) 30.

The main interferometer essential part 40 is provided with a housing 41, a beam splitter 42, a movable mirror unit 50 having a movable mirror 53, and a fixed mirror unit 60 having a fixed mirror 61 and an alignment mechanism 62.

The movable mirror unit 50 is provided with a hollow pipe 51 in cylindrical shape having the center in the forward and backward direction (X direction), a piston 52 in columnar form that is disposed within the hollow pipe 51 so that reciprocal movement is possible in the forward and backward direction, a movable mirror 53 fixed to the front portion of the piston 52, and a VCM 70.

The VCM 70 is provided with a static unit 71 and a movable unit 72.

The static unit 71 is provided with: a yoke 73 made of iron (magnetic material) having a cylindrical part 73a with the central axis being in the forward and backward direction and a rear sidewall in disc form; two magnets 74 (74a, 74b) in columnar form having a central axis in the forward and backward direction; and a pole piece 75 in columnar form having a central axis in the forward and backward direction. The first magnet 74a, the pole piece 75 and the second magnet 74b are fixed to the center portion on the front surface of the rear sidewall 73b of the yoke 73 in this order, and thus are disposed within the cylindrical part 73a of the yoke 73. In addition, the front portion of the cylindrical part 73a is attached to the rear portion of the housing 41 (hollow pipe 51).

A first slit 73c is created in the right sidewall of the cylindrical part 73a of the yoke 73 so as to extend in the forward and backward direction, and at the same time, a second slit 73d is created in the left sidewall of the cylindrical part 73a of the yoke 73 so as to extend in the forward and backward direction. That is to say, the first slit 73c and the second slit 73d are created in such locations that the slits are point symmetrical relative to the central axis (X direction) of the cylindrical part 73a of the yoke 73.

The movable unit 72 is provided with a bobbin 72a in cylindrical shape having a central axis in the forward and backward direction, and a circular coil 72b wound around the outer peripheral surface of the rear portion of the bobbin 72a. In addition, the front portion of the bobbin 72a is attached to the rear portion of the piston 52. Furthermore, the coil 72b is disposed between the cylindrical part 73a of the yoke 73 and the pole piece 75, and is electrically connected to the power supply (not shown) via a power supply terminal (power supply line) 72c that is disposed so as to pass through the first slit 73c in the upward and downward directions (Y direction). Moreover, a dummy power supply terminal 72d having the same shape as the power supply terminal 72c that is disposed so as to pass through the second slit 73d in the Y direction is formed in the movable unit 72. That is to say, the power supply terminal 72c and the dummy power supply terminal 72d are formed in such locations that the terminals are point symmetrical relative to the central axis (X direction) of the cylindrical part 73a of the yoke 73.

As a result, the coil 72b receives an electromagnetic force (Lorentz force) due to the magnetic field generated between the yoke 73 and the pole piece 75 so as to move in the forward and backward direction when a current is made to flow through the coil 72b via the power supply terminal 72c, and thus, the moving mirror 53 that is fixed to the piston 52 also moves in the forward and backward direction. At this time, a magnetic flux density as on the "there is a slit" side in FIG. 4 is generated on both sides, left and right sidewall sides, of the cylindrical part 73a of the yoke 73.

The computer 30 is provided with a CPU 31 and an input device 32. The CPU 31 can be divided into the following parts using the functions processed by them. The CPU 31 has: a light intensity information acquisition part 31a for acquiring an interferogram from the light detection unit 20; a sample measurement part 31b for calculating the absorbance spectrum and the like of the sample S; a movable mirror control part 31c for controlling the speed or the moved distance of the movable mirror in the movable mirror unit 50 on the basis of the input information that has been inputted through the input device 32; and a fixed mirror control part 31b for controlling the alignment mechanism 62 in the fixed mirror unit 60.

As described above, in the FTIR 1 according to the present invention, the first slit 73c and the second slit 73d are provided in such locations that the slits are symmetrical relative to the central axis of the yoke 73, and therefore, the difference in the impellent is cancelled so as to prevent a momentum that might cause a rotary motion from being generated. Thus, the angular deviation between the movable mirror 53 and the fixed mirror 61 when driven at a high speed can be suppressed to one second or less (see FIG. 5(a)).

### <Other Embodiments>

(1) Though the above-described FTIR 1 has a configuration that is provided with a dummy power supply terminal 72d, such a configuration is also possible where a coil is electrically connected to the power supply via the power supply terminal, and at the same time is electrically connected to the power supply via a dummy power supply terminal.
(2) Though the above-described FTIR 1 has a configuration that is provided with a dummy power supply terminal 72d, such a configuration is also possible where no dummy power supply terminal is provided.

### INDUSTRIAL APPLICABILITY

The present invention can be preferably applied to interference spectrophotometers such as a Fourier transform infrared spectrophotometer.

### Reference Signs List

- 1: FTIR (interference spectrophotometer)
- 70: VCM (voice coil motor)
- 71: static unit
- 72: movable unit
- 72b: coil
- 72c: power supply terminal (power supply line)
- 73: yoke
- 73a: cylindrical part
- 73c, 73d: slit
- 74: magnet

## Claims

1. A voice coil motor, comprising:
a static unit including
a yoke having a cylindrical part fixed to the static unit and
a magnet disposed in the cylindrical part fixed to the static unit;
a movable unit including a circular coil fixed thereto, the circular coil disposed between the cylindrical part of the yoke and the magnet; and
a power supply line for connecting the coil to a power supply, wherein
the cylindrical part of the yoke has a slit through which the power supply line is to pass is created,
the movable unit is configured to reciprocally move relative to the static unit in response to an electromagnetic force generated by the magnet in conjunction with the activated coil, and
another slit is created in the cylindrical part of the yoke in such a manner that the slits are symmetrical with respect to a central axis of the cylindrical part.

2. The voice coil motor according to claim 1, wherein the slits extend in parallel with the central axis.

3. A movable mirror unit, comprising:
the voice coil motor according to claim 1 or 2;
a hollow pipe having a cylindrical shape; and
a piston disposed in the hollow pipe, the piston being reciprocally movable in the hollow pipe, wherein
the piston includes a movable mirror fixed thereto and the movable unit are fixed to the piston.

4. An interference spectrophotometer, comprising:
the movable mirror unit according to claim 3;
a light source for emitting light;
a fixed mirror;
a beam splitter configured for the processes of
splitting light received from the light source into two beams,
directing one beam towards the fixed mirror and the other beam towards the movable mirror, receiving first returning light reflected from the fixed mirror and second returning light reflected from the movable mirror,
combining the first and second reflecting beams of light into interference light;
a light detection unit on which a sample is arranged, the detector configured to detect the interference light that has transmitted through or has been reflected from the sample; and
a control unit for controlling the speed of the movable unit or the moving distance of the movable unit with the coil activated via the power supply line.
